# EUROPEAN PATENT APPLICATION

(11) **EP 4 201 178 A1**
(43) Date of publication of application: **28.06.2023**
(21) Application number: 22213067.6
(22) Date of filing: 13.12.2022
(51) Int. Cl.: A01B 69/04, A01D 41/127

(54) **SYSTEM AND METHOD FOR GENERATING SWATH LINES FOR A WORK VEHICLE**

(30) Priority: 21.12.2021 US 202117557253
(71) Applicant: CNH Industrial Italia S.p.A., 10156 Torino (IT)
(72) Inventor: DIX, Phillip Duane, Westmont, 60559 (US); GEIYER, Daniel, Oshkosh, 54901 (US); SINGH, Aditya, Racine, 53404 (US); GULATI, Navneet, Racine, 53404 (US)
(74) Representative: CNH Industrial IP Department

(57) **Abstract**

A work vehicle (10) includes a frame (20) configured to support a plurality of components (102, 104, 106, 108) of the work vehicle (10). Furthermore, the work vehicle (10) includes a location sensor (110) configured to capture data indicative of a location of the work vehicle (10) within a field. Additionally, the work vehicle (10) includes a computing system (112) communicatively coupled to the location sensor (110). The computing system (112) is configured to control an operation of the plurality of components as the work vehicle (10) makes a first pass across the field. Moreover, the computing system (112) is configured to record a travel path of the work vehicle (10) as the work vehicle (10) makes the first pass across the field based on data captured by the location sensor (110). In addition, the computing system (112) is configured to generate a continuous swath line (120) formed from a plurality of line segments (122) such that the continuous swath line (120) corresponds to the recorded travel path of the work vehicle (10).

## Description

### FIELD OF THE INVENTION

The present disclosure generally relates to work vehicles and, more particularly, to systems and methods for generating swath lines for a work vehicle, such as an agricultural or construction vehicle.

### BACKGROUND OF THE INVENTION

Modern farming practices strive to increase yields of agricultural fields. As such, agricultural work vehicles, such as tractors, sprayers, harvesters, and/or the like, are used to perform agricultural operations on a field. In general, when performing an agricultural operation, it is necessary for the work vehicle to make a series of passes across the field. However, it is difficult for an operator to control the work vehicle such that passes are consistent and uniformly spaced apart. Inconsistent or non-uniformly spaced passes may result in lower crop yields and/or inefficient performance of the agricultural operation. In this respect, systems have been developed for generating swath lines or guidance lines for guiding a work vehicle along each pass across the field. While such systems work well, further improvements are needed.

Accordingly, an improved system and method for generating swath lines for a work vehicle would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to a work vehicle. The work vehicle includes a frame configured to support a plurality of components of the work vehicle. Furthermore, the work vehicle includes a location sensor configured to capture data indicative of a location of the work vehicle within a field. Additionally, the work vehicle includes a computing system communicatively coupled to the location sensor. The computing system is configured to control an operation of the plurality of components as the work vehicle makes a first pass across the field. Moreover, the computing system is configured to record a travel path of the work vehicle as the work vehicle make the first pass across the field based on data captured by the location sensor. In addition, the computing system is configured to generate a continuous swath line formed from a plurality of line segments such that the continuous swath line corresponds to the recorded travel path of the work vehicle.

In another aspect, the present subject matter is directed to a system for generating swath lines for a work vehicle. The system includes a location sensor configured to capture data indicative of a location of the work vehicle within a field. Furthermore, the system includes a computing system communicatively coupled to the location sensor. The computing system is configured to control an operation of the work vehicle as the work vehicle makes a first pass across the field. Additionally, the computing system is configured to record a travel path of the work vehicle as the work vehicle make the first pass across the field based on data captured by the location sensor. Moreover, the computing system is configured to generate a continuous swath line formed from a plurality of line segments such that the continuous swath line corresponds to the recorded travel path of the work vehicle.

In a further aspect, the present subject matter is directed to a method for generating swath lines for a work vehicle. The work vehicle, in turn, includes a location sensor configured to capture data indicative of a location of the work vehicle within a field. The method includes controlling, with a computing system, an operation of the work vehicle as the work vehicle makes a first pass across the field. In addition, the method includes recording, with the computing system, a travel path of the work vehicle across the field based on data captured by the location sensor. Furthermore, the method includes generating, with the computing system, a continuous swath line formed from a plurality of line segments such that the continuous swath line corresponds to the recorded travel path of the work vehicle.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a perspective view of one embodiment of a work vehicle and an associated agricultural implement in accordance with aspects of the present subject matter;
FIG. 2 illustrates a schematic view of one embodiment of a system for generating swath lines for a work vehicle in accordance with aspects of the present subject matter;
FIG. 3 illustrates a flow diagram providing one embodiment of control logic for generating swath lines for a work vehicle in accordance with aspects of the present subject matter;
FIG. 4 illustrates a diagrammatic view of example first and second swath lines in accordance with aspects of the present subject matter; and
FIG. 5 illustrates a flow diagram of one embodiment of a method for generating swath lines for a work vehicle in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a system and a method for generating swath lines for a work vehicle. Specifically, in several embodiments, a computing system of the disclosed system is configured to control the operation of the work vehicle as the vehicle makes a first pass across the field. In some embodiments, an operator may control the direction of travel of the work vehicle during the first pass. As the work vehicle makes the first pass, the computing system records the travel path of the vehicle based on data (e.g., coordinates) captured by a location sensor. Thereafter, the computing system generates a continuous swath line formed from a plurality of line segments such that the continuous swath line corresponds to the recorded travel path of the work vehicle. For example, in one embodiment. the line segments may include straight line segments, circular line segments, and/or clothoid curve line segments. In another embodiment, the line segments may include polynomial spline line segments and/or B-spline line segments.

The generation of a continuous swath line improves the operation of the work vehicle. More specifically, existing systems generate swath lines formed from a plurality of discrete location points within the field. Such point-based swath lines provide no indication of how a work vehicle is to travel between the location points. As such, existing systems must guess how the work vehicle is to move from one point to the next. Thus, a work vehicle relying on point-based swath lines generally makes less accurate passes across the field, which may result in reduced crop yield or inefficient performance of the agricultural operation (e.g., the need to make unnecessary passes across the field, which wastes fuel and time). However, as described above, the disclosed system and method generates continuous swath lines, with each continuous swath line being formed of a plurality of line segments. In this respect, such continuous swath lines provide constant guidance as where the vehicle is to be located during a pass across field (as opposed to at guidance only at a series of spaced locations). Accordingly, a work vehicle relying on continuous swath lines makes more accurate passes across the field, which improves crop yield and/or agricultural operation efficiency.

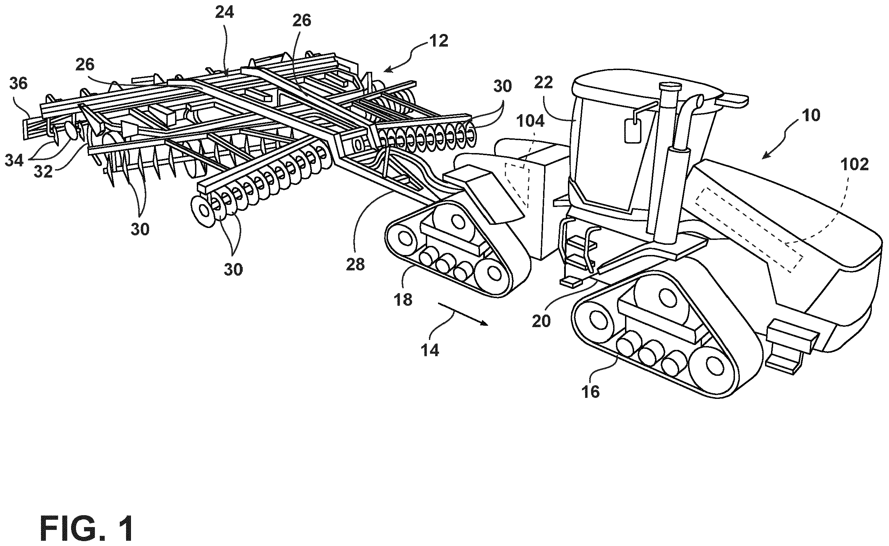

Referring now to the drawings, FIG. 1 illustrates a perspective view of a work vehicle 10 towing an associated agricultural implement 12 across a field in a direction of travel (indicated by arrow 14). In the illustrated embodiment, the work vehicle 10 is configured as an agricultural vehicle (e.g., an agricultural tractor) and the agricultural implement 12 is configured as a tillage implement (e.g., a disk ripper). However, in alternative embodiments, the work vehicle 10 may correspond to any other suitable type of agricultural vehicle (e.g., an agricultural harvester, a self-propelled sprayer, etc.) or construction vehicle (e.g., dozer, loader, grader, etc.) and the agricultural implement 12 may correspond to any other suitable type of agricultural implement (e.g., a seed-planting implement, a towable sprayer, etc.). Additionally, in some embodiments, the vehicle 10 may not be configured to tow an implement.

As shown in FIG. 1, the vehicle 10 includes a pair of front track assemblies 16, a pair of rear track assemblies 18, and a frame or chassis 20 coupled to and supported by the track assemblies 16, 18. An operator's cab 22 may be supported by a portion of the chassis 20 and may house various input devices for permitting an operator to control the operation of one or more components of the vehicle 10 and/or one or more components of the implement 12. Furthermore, the vehicle 10 may include an engine 102 and a transmission 104 mounted on the chassis 20. The transmission 104 may be operably coupled to the engine 102 and may provide variably adjusted gear ratios for transferring engine power to the track assemblies 16, 18 via a drive axle assembly (not shown) (or via axles if multiple drive axles are employed).

Additionally, as shown in FIG. 1, the implement 12 includes a frame 24. More specifically, the frame 24 generally includes a plurality of structural frame members 26, such as beams, bars, and/or the like, which are configured to support or couple to a plurality of components. For example, as will be described below, the frame 24 may be configured to support one or more ground-engaging tools configured to perform an agricultural operation on a field as the implement 12 travels across the field. Furthermore, a hitch assembly 28 may be connected to the frame 24 and configured to couple the implement 12 to the vehicle 10.

In several embodiments, the frame 24 may support one or more gangs or sets of disk blades 30. Each disk blade 30 may, in turn, be configured to penetrate into or otherwise engage the soil as the implement 12 is pulled through the field. In this regard, the various gangs of disk blades 30 may be oriented at an angle relative to the direction of travel 14 to promote more effective tilling of the soil. In the embodiment shown in FIG. 1, the implement 12 includes four gangs of disk blades 30 supported on the frame 24 adjacent to its forward end. However, in alternative embodiments, the implement 12 may include any other suitable number of gangs. Furthermore, in one embodiment, the gangs of disk blades 30 may be mounted to the frame 24 at any other suitable location, such as adjacent to its aft end.

Moreover, in several embodiments, the implement frame 24 may be configured to support other ground-engaging tools. For instance, in the illustrated embodiment, the frame 24 is configured to support a plurality of shanks 32. As shown, the shanks 32 are spaced apart from each other on the frame 24 in a lateral direction of the implement 12. The lateral direction, in turn, extends perpendicular to the direction of travel 14. As such, the shanks 32 are configured to rip or otherwise till the soil as the implement 12 is towed across the field. Furthermore, in the illustrated embodiment, the frame 24 is also configured to support a plurality of leveling blades 34 and a plurality of rolling (or crumbler) basket assemblies 36 positioned aft of the shanks 32. In such an embodiment, the leveling blades 34 may be spaced apart from each other in the lateral direction. However, in other embodiments, any other suitable ground-engaging tools may be coupled to and supported by the implement frame 24.

The configuration of the work vehicle 10 and the associated agricultural implement 12 described above and shown in FIG. 1 is provided only to place the present subject matter in an exemplary field of use. Thus, the present subject matter may be readily adaptable to any manner of work vehicle and/or implement configuration.

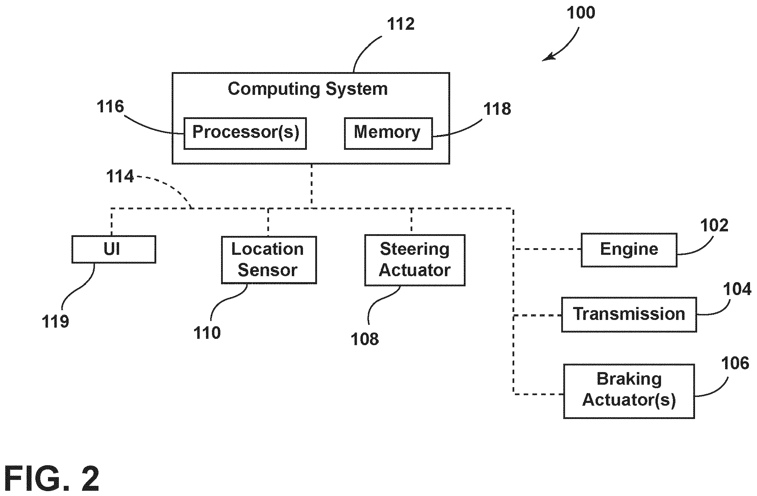

Referring now to FIG. 2, a schematic view of one embodiment of a system 100 for generating swath lines for a work vehicle is illustrated in accordance with aspects of the present subject matter. In general, the system 100 will be described herein with reference to the work vehicle 10 and the agricultural implement 12 described above with reference to FIG. 1. However, the disclosed system 100 may generally be used with work vehicles having any other suitable vehicle configuration and/or agricultural implement having any other suitable implement configuration.

As shown in FIG. 2, the system 100 includes one or more components of the work vehicle 10. For example, in the illustrated embodiment, the system 100 includes the engine 102 and the transmission 104 of the work vehicle 10. Additionally, in the illustrated embodiment, the system 100 includes one or more braking actuators 106 of the vehicle 10. In general, when activated, the braking actuator(s) 106 may reduce the speed at which the vehicle/implement 10/12 moves across the field, such as by converting energy associated with the movement of the vehicle/implement 10/12 into heat. For example, in one embodiment, the braking actuator(s) 106 may correspond to a suitable hydraulic cylinder(s) configured to push a stationary frictional element(s) (not shown), such as a brake shoe(s) or a brake caliper(s), against a rotating element(s) (not shown), such as a brake drum(s) or a brake disk(s). However, in alternative embodiments, the braking actuator(s) 106 may any other suitable hydraulic, pneumatic, mechanical, and/or electrical component(s) configured to convert the rotation of the rotating element(s) into heat.

Furthermore, in several embodiments, the system 100 may include a steering actuator 108 of the work vehicle 10. In general, the steering actuator 108 is configured to adjust the direction of travel 14 of the work vehicle 10. For example, the steering actuator 108 may correspond to an electric motor, an electric linear actuator, a hydraulic cylinder, a pneumatic cylinder, or any other suitable actuator coupled to suitable mechanical assembly, such as a rack and pinion or a worm gear assembly.

Moreover, the system 100 includes a location sensor 110 may be provided in operative association with the work vehicle 10 and/or the implement 12. In general, the location sensor 110 may be configured to determine or otherwise capture data indicative of the current location of the work vehicle 10 and/or the associated implement 12 using a satellite navigation positioning system (e.g., a GPS system, a Galileo positioning system, the Global Navigation satellite system (GLONASS), the BeiDou Satellite Navigation and Positioning system, and/or the like). In such an embodiment, the location data captured by the location sensor 110 may be transmitted to a computing system of the work vehicle 10 and/or the implement 12 (e.g., in the form coordinates) and stored within the computing system's memory for subsequent processing and/or analysis. Thus, the location data received from the location sensor 110 may be used to geo-locate the vehicle 10 within the field, thereby allowing for recording of the travel path of the vehicle/implement 10/12 across the field.

In addition, the system 100 includes a computing system 112 communicatively coupled to one or more components of the work vehicle 10, the implement 12, and/or the system 100 to allow the operation of such components to be electronically or automatically controlled by the computing system 112. For instance, the computing system 112 may be communicatively coupled to the location sensor 110 via a communicative link 114. As such, the computing system 112 may be configured to receive data (e.g., coordinates) from the location sensor 110 that is indicative of the location of the vehicle/implement 10/12 within the field. Furthermore, the computing system 112 may be communicatively coupled to various components of the vehicle 10, such as the engine 102, the transmission 104, the braking actuator(s) 106, and/or the steering actuator 108, via the communicative link 114. In this respect, the computing system 112 may be configured to control the operation of such components 102, 104, 106, 108 to the operation of the vehicle/implement 10/12 (e.g., its direction of travel 14, ground speed, etc.). In addition, the computing system 112 may be communicatively coupled to any other suitable components of the vehicle 10, the implement 12, and/or the system 100.

In general, the computing system 112 may comprise one or more processor-based devices, such as a given controller or computing device or any suitable combination of controllers or computing devices. Thus, in several embodiments, the computing system 112 may include one or more processor(s) 116 and associated memory device(s) 118 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 118 of the computing system 112 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 118 may generally be configured to store suitable computer-readable instructions that, when implemented by the processor(s) 116, configure the computing system 112 to perform various computer-implemented functions, such as one or more aspects of the methods and algorithms that will be described herein. In addition, the computing system 112 may also include various other suitable components, such as a communications circuit or module, one or more input/output channels, a data/control bus and/or the like.

The various functions of the computing system 112 may be performed by a single processor-based device or may be distributed across any number of processor-based devices, in which instance such devices may be considered to form part of the computing system 112. For instance, the functions of the computing system 112 may be distributed across multiple application-specific controllers or computing devices, such as a navigation controller, an engine controller, a transmission controller, an implement controller, and/or the like.

In addition, the system 100 may also include a user interface 119. More specifically, the user interface 119 may be configured to provide feedback from the computing system 112 (e.g., feedback associated with generated swath lines) to the operator. As such, the user interface 119 may include one or more feedback devices (not shown), such as display screens, speakers, warning lights, and/or the like, which are configured to provide feedback from the computing system 112 to the operator. As such, the user interface 119 may, in turn, be communicatively coupled to the computing system 112 via the communicative link 114 to permit the feedback to be transmitted from the computing system 112 to the user interface 119. Furthermore, some embodiments of the user interface 119 may include one or more input devices, such as touchscreens, keypads, touchpads, knobs, buttons, sliders, switches, mice, microphones, and/or the like, which are configured to receive inputs from the operator. In one embodiment, the user interface 119 may be mounted or otherwise positioned within the cab 22 of the work vehicle 10. However, in alternative embodiments, the user interface 119 may mounted at any other suitable location.

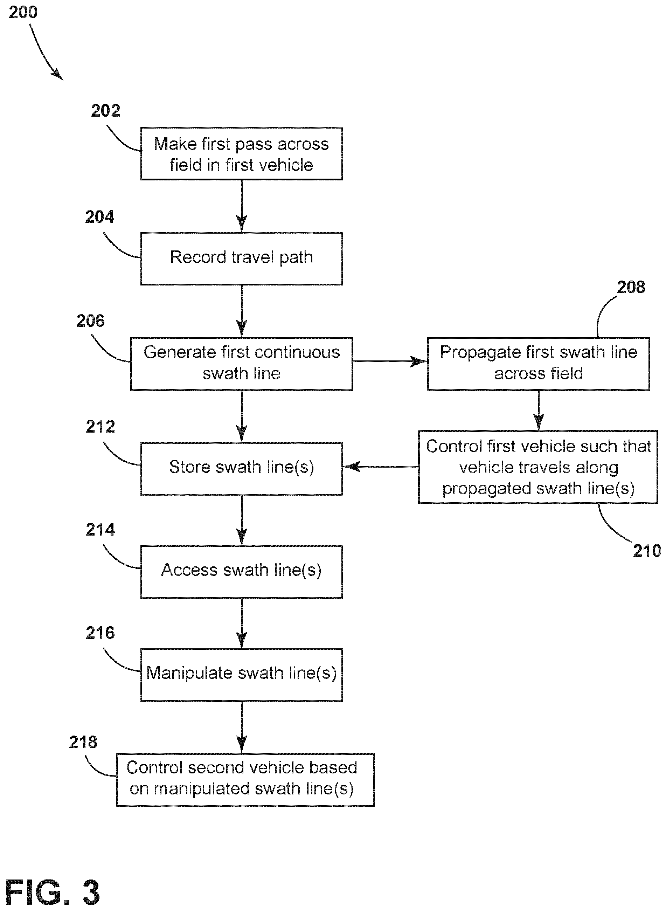

Referring now to FIG. 3, a flow diagram of one embodiment of control logic 200 that may be executed by the computing system 112 (or any other suitable computing system) for generating swath lines for a work vehicle is illustrated in accordance with aspects of the present subject matter. Specifically, the control logic 200 shown in FIG. 3 is representative of steps of one embodiment of an algorithm that can be executed to generate continuous swath lines for a work vehicle that allows the vehicle to make more accurate passes across the field, thereby improving agricultural outcomes and the efficiency of the agricultural operation. Thus, in several embodiments, the control logic 200 may be advantageously utilized in association with a system installed on or forming part of a work vehicle to allow for real-time control of generation of continuous swath lines for a work vehicle without requiring substantial computing resources and/or processing time. However, in other embodiments, the control logic 200 may be used in association with any other suitable system, application, and/or the like for generating swath lines for a work vehicle.

As shown, at (202), the control logic 200 includes controlling the operation of a first work vehicle as the first work vehicle makes a first pass across a field. Specifically, in several embodiments, the computing system 112 is configured to control the operation of one or more components of the work vehicle 10 and/or the associated implement 12 as the vehicle/implement 10/12 makes a first pass across the field (e.g., to perform an agricultural operation thereon). For example, the computing system 112 may transmit control signals to the engine 102, the transmission 104, and/or the braking actuator(s) 106 via the communicative link 114 to control the operation of such components 102, 104, 106 during the first pass.

As the vehicle/implement 10/12 makes the first pass across the field, the operator may control the direction of travel 14 of the vehicle/implement 10/12. For example, during the first pass, the operator may control the operation of the steering actuator 108 via a steering wheel, a joystick, or any other suitable input device. Thus, the operator generally controls or otherwise dictates the travel path of the vehicle/implement 10/12 during the first pass.

Furthermore, at (204), the control logic 200 includes recording the travel path of the first work vehicle as the vehicle make the first pass across the field based on data captured by a location sensor. Specifically, as mentioned above, in several embodiments, the computing system 112 may be communicatively coupled to the location sensor 110 via the communicative link 114. In this respect, as the vehicle/implement 10/12 makes the first pass across the field, the computing system 112 may receive data (e.g., coordinates) from the location sensor 110. Such data may, in turn, be indicative of the location of the vehicle/implement 10/12 within the field during the first pass. Based on the received data, the computing system 112 records to the travel path of the vehicle/implement 10/12 during the first pass.

Additionally, at (206), the control logic 200 includes generating a continuous swath line corresponding to the recorded travel path of the first work vehicle during the first pass. Specifically, in several embodiments, the computing system 112 generates a first continuous swath line based on the travel path of the vehicle/implement 10/12 recorded at (206). As such, the first continuous swath line provides a continuous (as opposed to discrete) representation of the position or travel path of the vehicle/implement 10/12 during the first pass. As will be described below, such a continuous swath line provides a more accurate representation of the travel path of the vehicle/implement 10/12 than conventional discrete point-based swath lines.

At (206), the continuous swath line is formed from a plurality of line segments. More specifically, the line segments are joined together end to end to form a continuous line representing the position or travel path of the vehicle/implement 10/12 during the first pass. Thus, each line segment represents the location of the vehicle/implement 10/12 across a given distance (e.g., ten feet) within the field. In some embodiments, each line segment may represent the same distance within the field (e.g., each line segment may represent ten feet of a pass). Alternatively, the line segments may represent differing distances, such as based on the shape of the line segments.

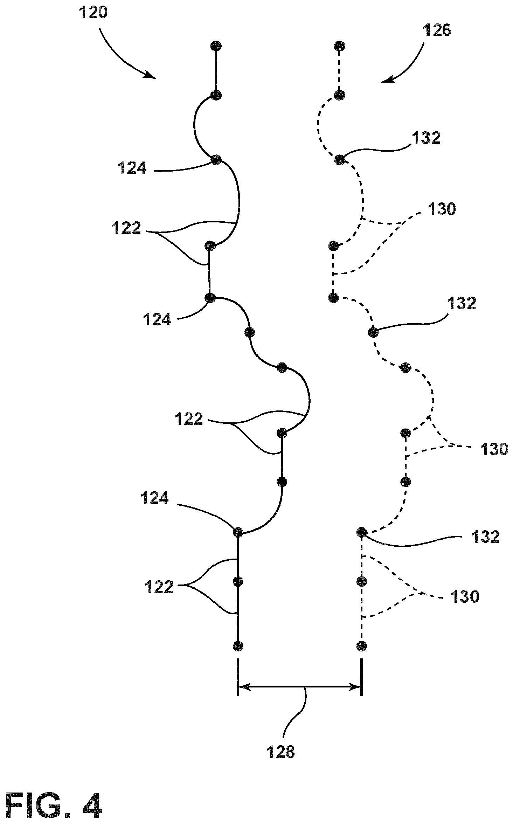

For example, FIG. 4 illustrates an example first swath line 120 corresponding to a first pass made by the vehicle/implement 10/12. As shown, the first swath line 120 is formed from a plurality of line segments 122 connected at end points 124. Thus, swath line 120 provides a continuous indication of the location of the vehicle/implement 10/12 during the first pass. The end points 124 are shown in FIG. 4 only to illustrate the line segments 122 forming the swath line 120. In practice, the swath line 120 is a continuous line.

Any suitable type and/or combination of line segments may be used to form the continuous swath line. The line segments may be straight or curved. For example, in one embodiment, the line segments used to form the continuous swath line may include straight-line segments, circular line segments, and/or clothoid curve line segments. In another embodiment, the line segments used to form the continuous swath line may include polynomial spline line segments and/or B-spline line segments.

The generation of a continuous swath line improves the operation of the work vehicle 10. More specifically, existing systems generate swath lines formed from a plurality of discrete location points within the field. Such point-based swath lines provide no indication of how a work vehicle is to travel between the location points. As such, existing systems must guess how the work vehicle is to move from one point to the next. Thus, a work vehicle relying on point-based swath lines generally makes less accurate passes across the field, which may result in reduced crop yield or inefficient performance of the agricultural operation (e.g., the need to make unnecessary passes across the field, which wastes fuel and time). However, continuous swath lines provide constant guidance as where the vehicle 10 is to be located during a pass across field (as opposed to at guidance only at a series of spaced apart locations). A vehicle relying on a continuous swath line for guidance knows where to be within the field at all times. Accordingly, a work vehicle relying continuous swath lines makes more accurate passes across the field, which improves crop yield and/or agricultural operation efficiency.

Referring again to FIG. 3, at (208), the control logic 200 includes propagating the first swath line across the field. Specifically, in several embodiments, the computing system 112 may propagate the first swath line generated at (206) across the field as one or more additional swath lines. For example, in such embodiments, the computing system 112 may generate a second continuous swath line across the field corresponding to a second pass (which has not yet been made) based on the first continuous swath line generated at (206). In general, the second continuous swath line may have the same or a substantially similar shape to the first swath line. However, the second swath line is spaced apart from the first swath line in the lateral direction by the swath width of the vehicle/implement 10/12. Thereafter, the computing system 112 may generate a third swath line spaced apart from the second swath line by the swath width of the vehicle/implement 10/12 and so on. At (208), the computing system 112 may generate any suitable number of swath lines based on the first swath line. As will be described below, in some embodiments, the vehicle/implement 10/12 may be automatically guided along the propagated swath line(s).

For example, FIG. 4 further illustrates an example second swath line 126 generated based on the first swath line 120. In general, the second swath line 126 corresponds to a second pass to be made by the vehicle/implement 10/12. As shown, the second swath line 126 is substantially the same as the first swath line 120 but spaced apart from the first swath line 120 by a swath width of the vehicle/implement 10/12 (e.g., as indicated by arrow 128). Additionally, like the first swath line 120, the second swath line 126 is formed from a plurality of line segments 130 connected at end points 132. The end points 132 are shown in FIG. 4 only to illustrate the line segments 130 forming the swath line 126. In practice, the swath line 126 is a continuous line.

Referring again to FIG. 3, at (210), the control logic 200 includes controlling the operation of the first work vehicle such that the vehicle automatically travels along the propagated swath line(s). Specifically, in several embodiments, the computing system 112 is configured to control the operation of the vehicle/implement 10/12 such that the vehicle/implement 10/12 automatically travels along the propagated swath line(s) generated at (208). For example, the computing system 112 may transmit control signals to the steering actuator 108 via the communicative link 114. The control signals, in turn, instruct the steering actuator 108 to automatically adjust the direction of travel 14 of the vehicle/implement 10/12 such that the vehicle/implement 10/12 travels along the second swath line, the third swath line, and so on. Thus, the propagated swath line(s) allow the vehicle/implement 10/12 to automatically travel back and forth across the field after the operator has made a first pass (e.g., along a boundary). As will be described below, after completion of (210), the control logic 200 proceeds to (212).

In alternative embodiments, the first swath line is not propagated across the field. Instead, the operator may manually control the travel path of the vehicle/implement 10/12 along each successive pass across the field. In such instances, (202) - (206) may be repeated for each successive pass made across the field such continuous swath lines for each pass are generated based on the recorded position of the vehicle/implement 10/12 during each pass. Thereafter, the control logic 200 may skip (208) and (210) and proceed to (212).

At (212), the control logic 200 includes storing the generated continuous swath line(s) within one or more memory devices. Specifically, in several embodiments, the computing system 112 may be configured to store the generated swath lines (e.g., the swath line(s) generated at (206) and/or propagated at (208)) within its memory device(s) 118 (or any other suitable memory device(s)) for subsequent use.

Furthermore, at (214), the control logic 200 includes accessing the stored continuous swath line(s) from the one or more memory devices. Specifically, in several embodiments, the computing system 112 may be configured to access the stored continuous swath line(s) from its memory device(s) 118 (or any other suitable memory device(s)). For example, the accessed continuous swath line(s) may be used to guide a second work vehicle across the field, such as during a subsequent agricultural operation.

Additionally, at (216), the control logic 200 includes manipulating the accessed continuous swath line. Specifically, in several embodiments, when the accessed continuous swath line(s) are being used to guide a second work vehicle, the computing system 112 may manipulate or otherwise adjust the accessed continuous swath line(s) based on a parameter(s) of the second work vehicle. For example, the computing system 112 may adjust the curvature of curved portions of the accessed continuous swath line(s) to accommodate differences in the maximum steering angles of the vehicle/implement 10/12 and a second work vehicle. Alternatively, in some embodiments, the accessed continuous swath line(s) are not manipulated, such as when the accessed continuous swath line(s) are being used to control the vehicle/implement 10/12 or another similar vehicle.

Moreover, at (218), the control logic 200 includes controlling the operation of a second work vehicle such that the second vehicle automatically travels along the manipulated swath line(s). Specifically, in several embodiments, the computing system 112 is configured to control the operation of a second work vehicle such that the second vehicle automatically travels along the swath line(s) manipulated at (216). For example, the computing system 112 may transmit control signals to the steering actuator of the second vehicle via the communicative link 114. The control signals, in turn, instruct the steering actuator to automatically adjust the direction of travel of the second vehicle such that the second vehicle travels along the manipulated swath line(s).

In addition, the computing system 112 may be configured to display any of the generated, propagated, stored, accessed, and/or manipulated swath lines to the operator of the vehicle/implement 10/12 and or the second vehicle. For example, the computing system 112 may initiate display of any such swath lines on the user interface 119.

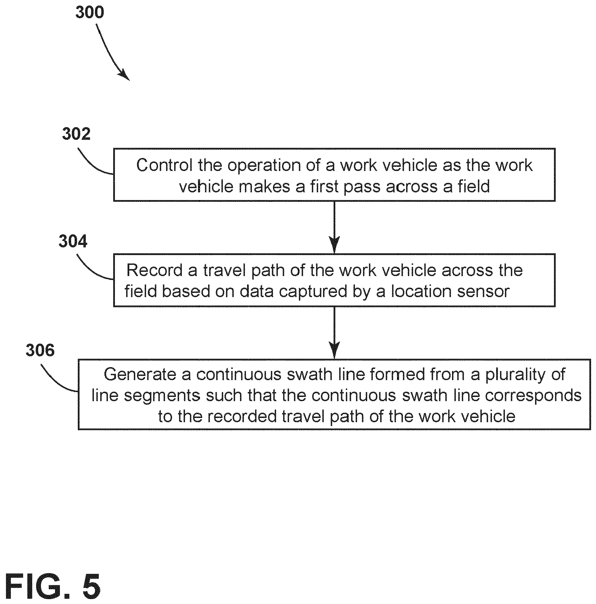

Referring now to FIG. 5, a flow diagram of one embodiment of a method 300 for generating swath lines for a work vehicle is illustrated in accordance with aspects of the present subject matter. In general, the method 300 will be described herein with reference to the work vehicle 10, the agricultural implement 12, and the system 100 described above with reference to FIGS. 1-4. However, the disclosed method 300 may generally be implemented with any work vehicle having any suitable vehicle configuration, with any agricultural implement having any suitable implement configuration, and/or any within system having any suitable system configuration. In addition, although FIG. 5 depicts steps performed in a particular order for purposes of illustration and discussion, the methods discussed herein are not limited to any particular order or arrangement. The various steps of the methods disclosed herein can be omitted, rearranged, combined, and/or adapted in various ways without deviating from the scope of the present disclosure.

As shown in FIG. 5, at (302), the method 300 includes controlling, with a computing system, the operation of a work vehicle as the work vehicle makes a first pass across the field. For instance, as described above, the computing system 112 may control operation of one or more components of the work vehicle 10, such as the engine 102, the transmission 104, and/or the braking actuator(s) 106, as the work vehicle 10 makes a first pass across a field (e.g., to perform an agricultural operation thereon).

Additionally, at (304), the method 300 includes recording, with the computing system, a travel path of the work vehicle across the field based on data captured by a location sensor. For instance, as described above, the computing system 112 may record the travel path of the work vehicle 10 across the field based on data (e.g., coordinates) captured by and received from the location sensor 110.

Moreover, as shown in FIG. 5, at (306), the method 300 includes generating, with the computing system, a continuous swath line formed from a plurality of line segments such that the continuous swath line corresponds to the recorded travel path of the work vehicle. For instance, as described above, the computing system 112 may generate a continuous swath line formed from a plurality of line segments such that the continuous swath line corresponds to the recorded travel path of the work vehicle 10.

It is to be understood that the steps of the control logic 200 and the method 300 are performed by the computing system 112 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 112 described herein, such as the control logic 200 and the method 300, is implemented in software code or instructions which are tangibly stored on a tangible computer readable medium. The computing system 112 loads the software code or instructions via a direct interface with the computer readable medium or via a wired and/or wireless network. Upon loading and executing such software code or instructions by the computing system 112, the computing system 112 may perform any of the functionality of the computing system 112 described herein, including any steps of the control logic 200 and the method 300 described herein.

## Claims

1. A system (100) for generating swath lines for a work vehicle (10), the system (100) comprising a location sensor (110) configured to capture data indicative of a location of the work vehicle (10) within a field and a computing system (112) communicatively coupled to the location sensor (110), the computing system (112) configured to control an operation of the work vehicle (10) as the work vehicle (10) makes a first pass across the field and record a travel path of the work vehicle (10) as the work vehicle (10) makes the first pass across the field based on data captured by the location sensor (110), the system **characterized by** the computing system being further configured to:
generate a continuous swath line formed from a plurality of line segments such that the continuous swath line corresponds to the recorded travel path of the work vehicle (10).

2. The system (100) as in claim 1, wherein the plurality of line segments comprises at least one of a straight-line segment, a circular line segment, or a clothoid curve line segment.

3. The system (100) as in any preceding claim, wherein the plurality of line segments comprises at least one of a polynomial spline line segment or a B-spline line segment.

4. The system (100) as in any preceding claim, wherein the continuous swath line corresponds to a first continuous swath line, the computing system (112) further configured to:
generate a second continuous swath line across the field corresponding to a second pass based on the first continuous swath line, the second continuous swath line being spaced apart from the first swath line by a swath width of the work vehicle (10); and
control the operation of the work vehicle (10) such that the work vehicle (10) travels along the second continuous line during the second pass.

5. The system (100) as in any preceding claim, wherein the computing system (112) is further configured to store the generated continuous swath line within one or more memory devices (118).

6. The system (100) as in any preceding claim, wherein the work vehicle (10) corresponds to a first work vehicle (10), the computing system (112) further configured to access the stored continuous swath line from the one or more memory devices (118) for use in guiding a second work vehicle (10) across the field.

7. The system (100) as in any preceding claim, wherein the computing system (112) is further configured to manipulate the accessed continuous swath line based on a parameter of the second work vehicle (10).

8. The system (100) as in any preceding claim, wherein the computing system (112) is further configured to initiate display of the generated swath line to an operator of the work vehicle (10).

9. The system (100) as in any preceding claim, wherein a direction of travel of the work vehicle (10) is controlled by an operator of the work vehicle (10) when the work vehicle (10) makes the first pass across the field.

10. A method (300) for generating swath lines for a work vehicle (10), the work vehicle (10) including a location sensor (110) configured to capture data indicative of a location of the work vehicle (10) within a field, the method (300) comprising controlling, with a computing system (112), an operation of the work vehicle (10) as the work vehicle (10) makes a first pass across the field and recording, with the computing system (112), a travel path of the work vehicle (10) across the field based on data captured by the location sensor (110), the method **characterized by**:
generating, with the computing system (112), a continuous swath line formed from a plurality of line segments such that the continuous swath line corresponds to the recorded travel path of the work vehicle (10).

11. The method (300) as in claim 10, wherein the plurality of line segments comprises at least one of a straight-line segment, a circular line segment, or a clothoid curve line segment.

12. The method (300) as in any of claims 10 or 11, wherein the plurality of line segments comprises at least one of a polynomial spline line segment or a B-spline line segment.

13. The method (300) as in any of claims 10 through 12, wherein the continuous swath line corresponds to a first continuous swath line, the method (300) further comprising:
generating, with the computing system (112), a second continuous swath line across the field corresponding to a second pass based on the first continuous swath line, the second continuous swath line being spaced apart from the first continuous swath line by a swath width of the work vehicle (10); and
controlling, with the computing system (112), the operation of the work vehicle (10) such that the work vehicle (10) travels along the second continuous swath line during the second pass.

14. The method (300) as in any of claims 10 through 13, further comprising:
storing, with the computing system (112), the generated continuous swath line within one or more memory devices (118).

15. The method (300) as in any of claims 10 through 14, wherein the work vehicle (10) corresponds to a first work vehicle (10), the method (300) further comprising:
accessing, with the computing system (112), the stored continuous swath line from the one or more memory devices (118) for use in guiding a second work vehicle (10) across the field.
